Europäisches Patentamt

**European Patent Office**

Office européen des brevets

(19)

(11) Publication number: **0 329 377**
**A2**

(12) **EUROPEAN PATENT APPLICATION**

(21) Application number: **89301376.3**

(22) Date of filing: **14.02.89**

(51) Int. Cl.⁴: **B32B 27/08**

(30) Priority: **15.02.88 GB 8803454**

(43) Date of publication of application:
**23.08.89 Bulletin 89/34**

(84) Designated Contracting States:
**AT BE CH DE ES FR GB GR IT LI NL SE**

(71) Applicant: **COURTAULDS FILMS &**
**PACKAGING (HOLDINGS) LTD.**
**Bath Road**
**Bridgwater Somerset TA6 4PA(GB)**

(72) Inventor: **Kendall, Kenneth Douglas**
**St Clair Main Road Middlezoy**
**Bridgwater Somerset(GB)**
Inventor: **Christopherson, Roy**
**3 Eldergrove Close**
**Bridgwater Somerset(GB)**
Inventor: **Blake, Martin Charles**
**2 Tulip Tree Close Bridgwater**
**Somerset TA6 4XD(GB)**

(74) Representative: **Claisse, John Anthony, Dr.**
**Courtaulds Films & Packaging (Holdings) Ltd**
**Bath Road**
**Bridgwater Somerset TA6 4PA(GB)**

(54) **Polymeric films.**

(57) This invention concerns oriented polymeric films consisting of a relatively thick layer of polypropylene homopolymer with a relatively thin acrylic polymer layer on one side and a relatively thin layer of a corona discharge or flame treated ethylene/propylene copolymer on the other. The layer of acrylic polymer is applied to the homopolymer layer before a final orientation step. The ethylene/propylene copolymer surface of these films have shown good printability without further treatment while the layer of acrylic polymer is not only printable but functions as a primer for polyvinylidene chloride and additionally heat seals to itself and to polyvinylidene chloride.

# POLYMERIC FILMS

This invention concerns oriented polymeric films, and more particularly such films having printable surfaces.

Various layers have been proposed for providing films of polypropylene homopolymer with printability. It is, for example, known to use layers of ethylene/propylene copolymers or layers of acrylic polymers for the purpose. However, in order to provide layers of ethylene/propylene copolymers with a surface which has good print retention without the ink smudging, they require a further treatment, for example using corona discharge. Layers of acrylic polymers, while accepting print, generally have the disadvantage of requiring to be applied to the film after orientation. This necessitates large and expensive film coating apparatus, frequently in an off-line stage. That is after orientation and film wind-up.

According to the present invention there is provided an oriented polymeric film comprising a relatively thick layer of polypropylene homopolymer having a relatively thin acrylic polymer layer on one side and a relatively thin layer of a corona discharge or flame treated ethylene/propylene copolymer on the other, the layer of acrylic polymer having been applied to the homopolymer layer before a final orientation step.

Films of the present invention have the advantage not only of being printable on the surface of the ethylene/propylene copolymer without the necessity for further treatment, but the layer of acrylic polymer, whilst also being printable, functions as a primer for polyvinylidene chloride (PVdC) and furthermore it heat seals to itself and to PVdC, whereas the ethylene/propylene copolymer would require a further priming layer if it were to be coated with with PVdC. The ethylene/propylene copolymer also does not heat seal to PVdC. This is furthermore achieved without the use of large film coating equipment since the layer of acrylic polymer is applied to the polypropylene homopolymer layer before final orientation of the film.

In general, it is preferred that the acrylic polymer has a glass transition temperature Tg of at least 40°C, in particular to minimise blocking to freshly applied layers of PVdC. The acrylic polymer preferably has a molecular weight of from 80,000 to 200,000 g/mol. If the molecular weight of the polymer is too high, the rate of softening of the polymer can decrease to such an extent that the heat seal temperature of the film becomes unacceptably high. Conversely, inadequate heat seal can occur if the polymer has a particularly low molecular weight.

It is in general preferred to use acrylic polymers containing units derived from at least two monomers, one at least being an acrylic monomer. By the term acrylic polymers we mean polymers containing a majority of units derived from one or more acrylic monomers. Examples of acrylic polymers which can be used include terpolymers derived from methyl methacrylate, 2-ethylhexyl acrylate and acrylic acid, and copolymers of styrene and butyl acrylate.

In a preferred embodiment of the present invention, polypropylene homopolymer and an ethylene/propylene copolymer are co-extruded to form a base web which is oriented in the machine direction. The homopolymer layer is then coated with a composition including the acrylic polymer, and thereafter oriented in the transverse direction, e.g. using a stenter. The composition can be applied to the machine direction oriented web in known manner.

The composition containing the acrylic polymer is preferably an aqueous emulsion containing 5 to 60 weight per cent, more preferably 30 to 40 weight per cent, of dispersed acrylic solids. The composition can also contain other materials, for example particulates for providing the film with anti-block properties, e.g. silica, waxes, talc, diatomaceous earth, calcium silicate, finely divided clay or bentonite.

After application of the composition containing the acrylic polymer to the homopolymer layer, the composition is dried and oriented to form the finished acrylic polymer layer of the film. Drying of the film advantageously occurs in the stenter at a rate which results in a substantially coherent layer of the acrylic polymer being formed on the polypropylene homopolymer layer.

The thickness of the acrylic polymer layer on the homopolymer layer is preferably from 0.05 to 5 microns more preferably from 0.4 to 0.6 microns and advantageously about 0.5 microns.

The homopolymer layer is preferably from 15 to 50 microns thick, more preferably from 20 to 35 microns thick.

In order substantially to retain the heat sealability of the acrylic polymer layer to itself and the ability of the acrylic polymer layer to prime for PVdC, it is generally preferred to omit from the relatively thick polypropylene homopolymer layer additives often added to the core of multilayer polypropylene films. In particular it is preferred to omit erucamide, glycerol mono-stearate and bis-ethoxylated amines.

The homopolymer layer can be either non-voided or voided. When voided, voiding can be effected in known manner by including an organic or inorganic filler in the homopolymer, for example using chalk, silica, a nylon or a polyester. When the homopolymer layer is voided, a layer of non-voided polypropylene homopolymer will in general be provided between it and the layer of acrylate polymer. However, such a further layer can also be provided if the relatively thick layer of polypropylene homopolymer is non-voided. If a further layer of polypropylene homopolymer is used, it is preferably from 1 to 5 microns thick. With voided film, the gloss of the film tends to increase as the thickness of the further layer is increased.

The ethylene/propylene copolymer layer is preferably produced from a copolymer containing from 2 to 6 weight percent, more preferably about 4 percent, by weight of units derived from ethylene.

The copolymer layer is preferably from 0.6 to 4 microns thick. when the relatively thick homopolymer layer is non-voided, the copolymer layer is advantageously about 0.8 microns thick, and when voided, the copolymer layer is advantageously about 1 .5 microns thick.

The copolymer layer can be subsequently treated, for example by corona discharge, to promote adhesion of a priming coat, for example to promote adhesion of a layer of PVdC.

The following Example is given by way of illustration only. All parts are by weight unless stated otherwise.

EXAMPLE

A three layer polymeric web was produced by coextruding a polypropylene homopolymer core with a layer of polypropylene homopolymer on one side and a layer of a propylene/ethylene copolymer containing 4 percent of units of ethylene on the other. The web was then stretched in the direction of extrusion (machine direction) 4.5:1 times using a series of heated rollers.

Thereafter, the web was coated on the homopolymer face with an aqueous dispersion containing 40 per cent by weight of an acrylic polymer neutralised to pH8 using ammonia solution, and 0.04 percent by weight of silica particles (mean particle size 5 microns). The acrylic polymer consisted of 78 percent by weight of units derived from methyl methacrylate, 19.4 percent of units derived from 2-ethylhexylacrylate and 2.6 percent by weight of units derived from acrylic acid. The acrylic polymer had a molecular weight of approximately 200,000 g/mol and Tg of 45° C.

The coated web was stretched in the transverse direction by a ratio of 10:1 using a stenter.

The resultant film, having a core 23.4 microns thick and two outer layers each 0.8 microns thick, was corona discharge treated on the copolymer face, and wound up.

The copolymer face of the film was subsequently printed with a priming ink to which was applied a polyvinylidene chloride (PVdC) overlaquer. The film showed minimal self blocking, and the acrylic coated face had good heat-sealability to itself and to the PVDC overlaquer.

Claims

1. An oriented polymeric film comprising a relatively thick layer of polypropylene homopolymer having a relatively thin acrylic polymer layer on one side and a relatively thin layer of a corona discharge or flame treated ethylene/propylene copolymer on the other, the layer of acrylic polymer having been applied to the homopolymer layer before a final orientation step.

2. A film according to claim 1, having a relatively thin layer of non-voided polypropylene homopolymer between the acrylic polymer layer and the relatively thick layer of polypropylene homopolymer.

3. A film according to claim 2, wherein the said layer of non-voided polypropylene homopolymer is from 1 to 5 microns thick.

4. A film according to claim 2 or claim 3, wherein the relatively thick layer of polypropylene homopolymer is voided.

5. A film according to any of the preceding claims, wherein the copolymer layer has been treated to promote priming.

6. A film according to any of the preceding claims, wherein the relatively thick layer of polypropylene homopolymer is from 15 to 50 microns thick.

7. A film according to any of the preceding claims, wherein the acrylic polymer layer is from 0.05 to 5 microns thick.

8. A film according to claim 7, wherein the acrylic polymer layer is from 0.4 to 0.6 microns thick.

9. A film according to any of the preceding claims, wherein the copolymer layer is from 0.8 to 4 microns thick.

10. A film according to any of the preceding claims, wherein the acrylic polymer layer has been formed by applying a layer of the acrylic polymer to the relatively thick layer of polypropylene homopolymer before a final orientation of the film in a stenter.